# EUROPEAN PATENT SPECIFICATION

(11) **EP 0 729 296 B1**
(45) Date of publication and mention of the grant of the patent: **04.02.1998**
(21) Application number: 95900692.5
(22) Date of filing: 10.11.1994
(51) Int. Cl.: A01M 7/00, B01F 15/00

(54) **PORTABLE MULTI-COMPARTMENT CHEMICAL STORAGE AND MIXING TANK**
TRANSPORTIERBARER MEHRKAMMER TANK FÜR LAGERUNG UND VERMISCHUNG VON CHEMIKALIEN
RESERVOIR TRANSPORTABLE DE STOCKAGE ET DE MELANGE DE SUBSTANCES CHIMIQUES A COMPARTIMENTS MULTIPLES

(30) Priority: 17.11.1993 US 153052
(43) Date of publication of application: 04.09.1996
(73) Proprietor: BASF CORPORATION, Mount Olive, New Jersey 07828-1234 (US)
(72) Inventor: ROACH, Matthew N., Apex, NC 27502 (US); STAPENSEA, Neil, Raleigh, NC 27615 (US); WEBSTER, Jon, Cary, NC 27511 (US)
(74) Representative: Langfinger, Klaus-Dieter, Dr.
(86) International application number: PCT/EP94/03705
(87) International publication number: WO 95/13696

(56) References cited:
- US-A- 3 921 907
- US-A- 3 967 920
- US-A- 4 390 035
- US-A- 5 016 817

## Description

This invention is related to the field of liquid storage tanks and mixing systems. In preferred forms, the present invention is embodied in a closed tank system (i.e., the tank is not open to the ambient environment) which permits storage of at least two dissimilar liquid agricultural chemicals and, just prior to application, will allow a metered mixture of such chemicals to be dispensed to an agricultural applicator.

It is oftentimes desirable to apply agricultural chemicals to crops so as to stimulate crop growth, control pests, alleviate crop disease or the like. However, since agricultural chemicals are not universally effective for all desired purposes, it is typically necessary for individual chemicals to be applied separately to crop fields. Such a multiple application technique, of course, increases the time needed in order to apply the individual chemicals to the crop fields and/or requires dedicated multiple application equipment to apply the chemicals simultaneously. As a direct result, therefore, application efficiency of the agricultural chemicals is diminished, while the cost associated with application is increased.

Premixing of the agricultural chemicals in desired ratios so that a single application pass over the crop field is an attractive alternative to the abovedescribed multiple pass application technique. However, there are several real and nontrivial problems associated with premixing of agricultural chemicals. For example, many agricultural chemicals are not shelf-stable when mixed with one another. As a practical matter, therefore, such mixture instability precludes an agricultural chemical manufacturer from supplying end users with dissimilar agricultural chemicals pre-mixed to desired application ratios.

Furthermore, the premixed agricultural chemicals would be subject to government registration procedures requiring, for example, user toxicological and product chemistry studies to be conducted prior to actual use even though each of the agricultural chemicals in the mixture have individually been registered. An exception under the government registration procedures exists, however, if the premixed agricultural chemicals can be supplied to their point of use and transferred to the crop applicator equipment without exposure to the user. Thus, even if it is assumed for the moment that the agricultural chemicals are storage-stable in the mixture, there is currently no known commercially viable means whereby the premixed agricultural chemicals can be stored and transferred to crop applicator equipment via a "closed" system - i.e., a system which precludes exposure of the user to the premixed chemicals during the storage and transfer procedures.

What has been needed, therefore, is a system whereby functionally and/or chemically dissimilar agricultural chemicals may be stored separately of one another in a self-contained tank, yet mixed in a desired ratio prior to crop application. It would furthermore be highly desirable if such a system could transfer the mixture of agricultural chemicals to crop applicator equipment without exposure to the end-user (i.e., so that the self-contained storage and mixing tank could qualify as a "closed" system for purposes of government regulatory rules). It is towards fulfilling such needs that the present invention is directed.

In US 5,016,817, which covers the preamble of independent claim 1, a device and method for precisely spraying quantities of pesticides or fluids with little waste is disclosed.

US 3,967,920 describes horticulture spraying systems for mixing and metering two liquids in precise quantities by constant volume pumping.

Both systems are complicated in comparison to the present invention.

Broadly, the present invention is embodied in a self-contained pressurized and portable tank system whereby dissimilar agricultural chemicals can be stored separately of one another, yet are mixed at a selected ratio in response to transferal of the chemicals to crop applicator equipment. More specifically, the present invention is embodied in a portable holding and mixing tank system for liquid chemicals which includes a tank having an interior space and one or more dividing walls establishing at least two fluid-isolated holding compartments within the tank interior space for respectively holding respective liquid chemicals.

A manifold assembly defines respective channels for the liquid chemicals and for pressurizing fluid supplied from a source thereof. The liquid and pressurizing fluid channels are fluid-connected to each of the holding compartments. A pressurizing supply conduit fluid-connects the source of pressurizing fluid to pressurizing fluid channel, while liquid supply risers respectively fluid connect the liquid chemicals contained in each of the holding compartments to the liquid channel defined by the manifold assembly. A liquid discharge port fluid-connects the liquid channel defined by the manifold assembly.

As a result, the liquid chemicals within each of the holding compartments are forcibly introduced by means of the pressurizing fluid therewithin into the liquid channel defined by the manifold assembly and are mixed with one another within the liquid channel prior to discharge through the discharge port.

This results in a holding and mixing tank which is compact and particularly simple as it only provides a single fluid supply conduit for the pressurising fluid.

These, as well as other, aspects and advantages of the present invention will become more clear after careful consideration is given to the detailed description of the preferred exemplary embodiment thereof which follows.

Reference will hereinafter be made to the accompanying drawings wherein like reference numeral throughout the various FIGURES denote like structural elements, and wherein:
FIGURE 1 is a perspective view showing the multi-compartment tank system in accordance with the present invention during an operation whereby a mixture of the individual agricultural chemicals contained thereby is transferred to crop applicator equipment;
FIGURE 2 is an elevational view, partly in section, of the multi-compartment tank system in accordance with the present invention;
FIGURE 3 is a cross-sectional plan view of a pressurization/mixing manifold assembly employed with the multi-compartment tank system in accordance with the present invention;
FIGURE 4 is a cross-sectional elevational view of the manifold assembly shown in FIGURE 3 as taken along line 3-3 therein; and
FIGURE 5 is a perspective view, partly in section, of a preferred transfer coupling associated with the transfer conduit employed with the multi-compartment tank system in accordance with the present invention.

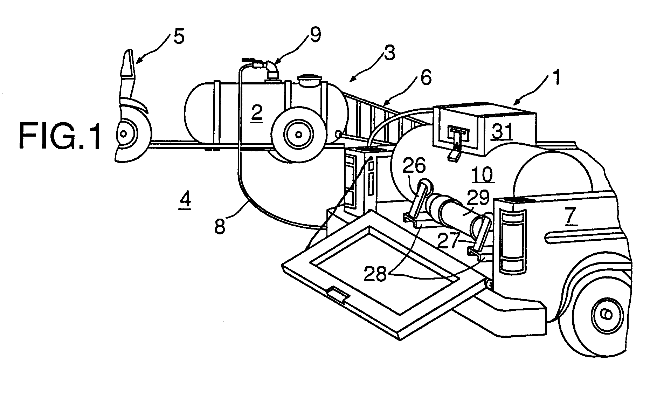

Accompanying FIGURE 1 depicts schematincally the multi-compartment tank system 1 in accordance with the present invention during an operation whereby a mixture of the individual agricultural chemicals contained thereby is transferred to a wheeled supply tank 2 associated with crop applicator equipment 3. As is well known, the crop applicator equipment 3 may be moved across the crop field 4 by any suitable vehicle, such as by the agricultural tractor 5 shown in FIGURE 1. The crop applicator equipment 3 will typically include an application spray boom 6 so that the liquid agricultural chemicals within the supply tank 2 may be applied to the crop field 4 at the desired application rate.

The multi-compartment tank system 1 in accordance with this invention may be brought physically onto the crop field by any suitable vehicle, such as by the flat bed truck 7 shown. Thus, the tank system 1 could be filled with the desired chemicals by the chemical manufacturer at its manufacturing facility or at a prearranged supply terminal, and thereafter shipped directly to the user.

The user would then transfer the contents of the tank system 1 to the supply tank 2 of the crop applicator equipment 3 using a flexible transfer conduit 8 equipped with a one-way flow coupling 9 (to be discussed in greater detail below). The entire tank system 1 could then be returned by the end user to the manufacture for refilling purposes once the agricultural chemicals contained in the tank system 1 had been emptied into the supply tank 2.

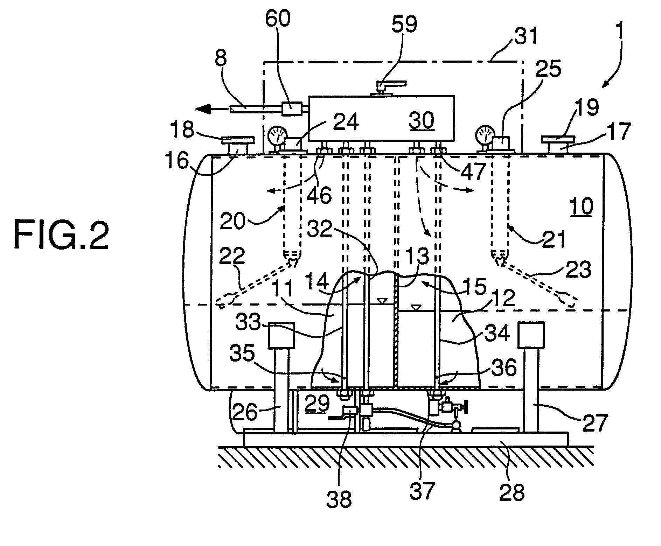

The structural components associated with the tank system 1 in accordance with the present invention are more clearly shown in accompanying FIGURE 2. In this regard, the tank system 1 will include a tank 10 having the desired geometrical configuration and volumetric capacity to contain two dissimilar agricultural chemicals 11 and 12. An interior dividing wall 13 subdivides the interior space of the tank 10 into two chemical holding compartments 14 and 15 for respectively holding the agricultural chemicals 11 and 12. The compartments 14 and 15 are, moreover, isolated from one another by virtue of the dividing wall 13 so as to prevent premature mixing of the agricultural chemicals 11 and 12. It will, of course, be realized by those skilled in the art that more than two such compartments may be provided so as to hold more than two dissimilar chemicals, in which case further dividing walls 13 would be present within the interior of the tank 10.

The tank 10 is provided with chemical supply ports 16 and 17 which allow the agricultural chemicals to be introduced into the holding compartments 14 and 15, respectively. Each of the supply ports 16 and 17 is closed by means of a vapor-tight cover 18 and 19 so as to prevent escape of the agricultural chemicals 11 and 12, respectively. The liquid level of each of the agricultural chemicals 11 and 12 within the holding compartments 14 and 15 may be determined by float level indicators 20, 21 which respectively include a level float 22, 23 disposed within each of the holding compartments 14 and 15, and opperatively connected to a sight level gauge 24, 25 disposed on the exterior of the tank 10.

The tank 10 is most preferably supported by pairs of support posts 26, 27 which are rigidly connected to the tank 10 at upper ends thereof and to a support platform 28 at lower ends thereof. The support posts 26, 27 are, moreover, of a sufficient length to provide for space to accommodate a cylinder 29 containing a source of pressurizing fluid (e.g., nitrogen gas) which serves to contain the liquid agricultural chemicals 11 and 12 under pressure and allows them to be forcibly transferred to the supply tank 2 associated with the crop applicator equipment 3 without necessarily requiring mechanical pumping means.

A manifold assembly 30 is mounted onto the tank 10 and is preferably contained within a security cover 31 (see also FIGURE 1) to prevent unauthorized dispensing and/or tampering with the contents of the tank 10. As will be described in greater detail below, the manifold 30 distributively fluid-connects the pressurizing fluid of the cylinder 29 to each of the holding compartments 14 and 15 as well as providing a means by which the liquid agricultural chemicals 11 and 12 may simultaneously be withdrawn from their respective holding compartments 14 and 15, mixed with one another and then transferred via the transfer conduit 8 to the spray tank 2 associated with the crop applicator equipment 3. In this regard, the pressurizing fluid contained within the cylinder 29 is supplied to the manifold assembly 30 via the pressurizing riser 32, while each of the liquid agricultural chemicals 11 and 12 is supplied separately to the manifold assembly 30 via liquid supply risers 33 and 34, respectively. The liquid supply risers 33, 34 may be open at their lower ends and submerged below the liquid level of the agricultural chemicals 11 and 12, respectively. However, for purposes of structural integrity, it is preferred that each of the risers 33, 34 extend completely through the interior of the respective holding compartments 14 and 15, with inlet apertures 35 and 36 being provided near the bottom of tank 10. The pressurizing riser 32 is fluid-connected to the cylinder 29 via supply conduit 37 provided with a shut-off valve 38.

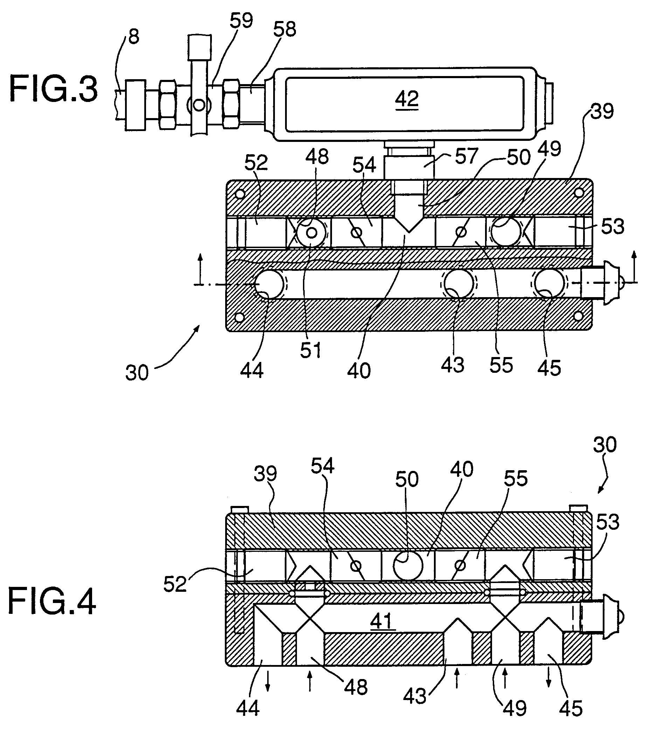

The structural details of the manifold assembly 30 are better shown in accompanying FIGURES 3 and 4. As is seen, the manifold assembly 30 includes a housing block 39 which establishes interior liquid and gas distribution channels 40 and 41, respectively. The gas distribution channel 41 is fluid-connected to a gas-receiving port 43 and, depending upon the number of isolated holding chambers within the interior of tank 10, to a pair of gas-discharge ports 44 and 45, the latter in turn-being fluid-connected with the holding compartments 14 and 15 via nipples 46 and 47, respectively (see FIGURE 2). On the other hand, the liquid distribution channel 40 is fluid-connected to each of the liquid supply risers 33, 34 via inlet ports 48, 49, respectively, and to a mixing unit 42 via discharge port 50.

A restrictive orifice 51 may be disposed in inlet port 48 so that the desired volume of liquid agricultural chemical 11 is supplied to the distribution channel 40 and mixed in proper ratio to the liquid agricultural chemical 12 supplied via inlet port 49. Additionally or alternatively, metering of the liquid agricultural chemicals may be provided by metering screws 52, 53 threadably coupled within the distribution channel 40. One-way flow valves 54, 55 are disposed in the liquid distribution channel 40 between the inlet ports 48, 49 and the discharge port 50, so as to prevent lack-flow of the agricultural chemicals 11 and 12, respectively.

Since the liquid agricultural chemicals 11 and 12 are introduced into the distribution channel 40 in direct axial opposition to one another, some mixing will occur prior to being discharged from the manifold 30 via discharge port 50. However, it is preferred that a further mixing unit 42 be fluid connected at its inlet and discharge nipples 57 and 58 to the discharge port 50 and a proximal shut-off valve 59. Most preferably, the inlet and discharge nipples 57, 58, respectively will be oriented at right angles to one another. As a result, the preliminarily mixed liquid agricultural chemicals 11 and 12 discharged from port 50 will enter the mixing chamber (not shown) defined within the mixing unit 42 and, by virtue of the right angle orientation of the inlet and discharge nipples 57 and 58, respectively, will be further mixed in a turbulent manner therewithin. The now thoroughly mixed agricultural chemicals 11, 12 will then flow through the transfer conduit 8 to the spray tank 2 associated with the crop applicator equipment 3. The flow of the mixed agricultural chemicals can be ascertained visually by a suitable flow meter 60 (see FIGURE 2).

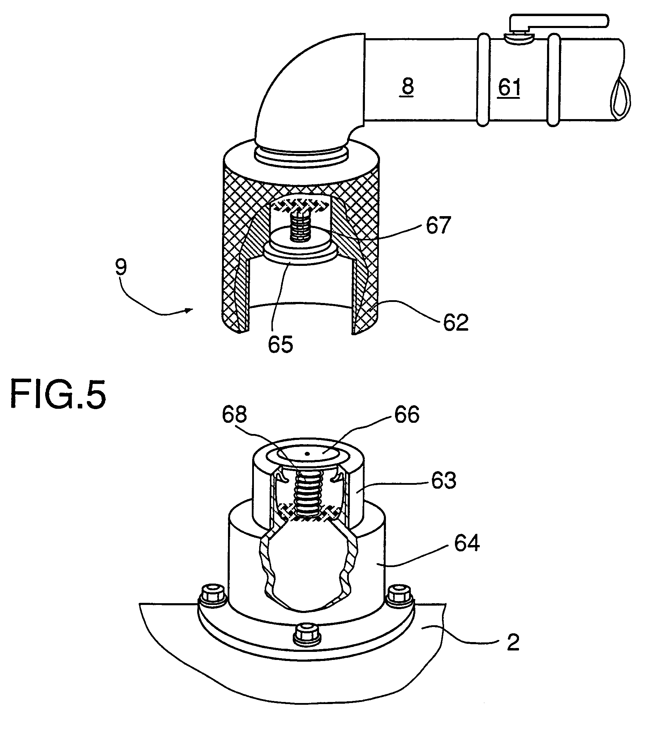

The one-way flow coupling 9 provided at the distal end of the transfer conduit 8 is shown specifically in accompanying FIGURE 5. In this regard, a distal shut-off valve 61 is disposed in-line with the transfer coupling 8 and serves to complement the shut-off functions provided by the proximal valve 59 depicted in FIGURE 3. The flow coupling 9 is most preferably a female coupling 62 which mates with the male coupling 63 associated with the supply nipple 64 of the supply tank 2. Flow stops 65 and 66 are disposed in the couplings 62, 63 and are maintained in a fluid-tight seal therewithin by virtue of tension and compression springs 67, 68, respectively. Therefore, when disconnected or when the mixture of agricultural chemicals 11 and 12 is not flowing within the transfer conduit 8 (e.g., by virtue of the shut-off valves 59 and/or 61 being closed), the flow stops will be seated in a fluid-tight manner within the couplings 62 and 63, respectively. However, under influence of the flow of agricultural chemical mixture, each of the flow stops 65 and 66 will unseat against the bias force of their respective springs 67 and 63 be thereby allowing the agricultural chemical mixture to be introduced into the supply tank 2. In such a manner, the mixture of agricultural chemicals may be introduced into the supply tank 2 without exposure to the user.

In use, the pressurizing fluid will be transferred from the cylinder 29 and distributed equally between the holding compartments 14 and 15 by virtue of the manifold assembly 30. As a result, when a mixture of the agricultural chemicals 11 and 12 is desired to be introduced to the supply tank 2, the flow coupling 9 associated with the transfer conduit 8 will be mated with the coupling 63 associated with the supply tank's nipple 64. The valves 59 and 61 may then be opened. Since the liquid agricultural chemicals 11 and 12 within each of the holding compartments 14 and 15 will be under substantially equivalent pressure by virtue of the pressurizing fluid, they will each be forcibly expelled from the holding compartments 14 and 15, through risers 33, 34, respectively. Metering of the flow of liquid agricultural chemicals 11 and 12 is provided by the orifice 51 and/or via metering screws 52, 53. so that the proper desired ratio of agricultural chemicals are mixed within channel 40 and the mixing unit 42.

As can now be appreciated, the present invention provides a "closed" system whereby at least two dissimilar liquid agricultural chemicals may be stored in isolation to one another. Moreover, the present invention allows such agricultural chemicals, or other dissimilar liquids, to be mixed in a "closed" system just prior to usage without endangering the user with exposure to such mixture. As a consequence, many (if not all) of the problems noted previously with respect to mixtures of agricultural chemicals can be alleviated by virtue of this invention.

## Claims

1. A portable holding and mixing tank system for at least two dissimilar liquids (11, 12), said system having a source of pressurizing fluid (29), a manifold assembly (30) defining a channel (40) for said dissimilar liquids (11, 12) and a channel (41) for said pressurized fluid, said tank system further comprising a pressurizing supply conduit (37) and liquid supply risers (33, 34), wherein said dissimilar liquids (11, 12) are forcibly introduced by means of said pressurizing fluid into said liquid channel (40) and said dissimilar liquids (11, 12) are mixed with one another in said liquid channel (40) prior to discharge through a discharge port (50), characterised in that said tank system comprises a tank (10) having an interior space and one or more dividing walls (13) each of which establishes at least two fluid-isolated holding compartments (14, 15) for holding a respective one of said dissimilar liquids (11, 12), and wherein said pressurizing fluid supply conduit is a single fluid supply conduit (37) which fluid-connects said source of pressurizing fluid (29) to said pressurizing fluid channel (41), and wherein said pressurizing fluid channel (41) is fluid-connected to each of said holding compartments so that said pressurizing fluid is distributed substantially equally therebetween.

2. A system as in claim 1, wherein said manifold assembly (30) includes a housing block (39) which integrally defines said channel for pressurizing fluid (41) and said liquid channel (40).

3. A system as in claim 1, wherein said tank (10) includes at least one supply port (16, 17) for each fluid-isolated compartment.

4. A system as in claim 1, further comprising a mixing unit (42) fluid-connected to said discharge port (50).

5. A system as in claim 1, further comprising a level gauge (24, 25) for each fluid-isolated compartment.

6. A system as in claim 1, further comprising a flexible transfer conduit (8) connectable at the proximal end thereof to said discharge port (50) and including at the distal end thereof a flow coupling (9).

7. A system as in claim 6, wherein said flow coupling (9) includes a flow stop which forms a fluid-tight seal in the absence of liquid flow through said transfer conduit (8).

8. A system as in claim 7, wherein said flow coupling (9) includes a bias spring for biasing said flow stop in a direction to form said fluid-tight seal.

9. A system as in claim 1, wherein said pressurizing fluid supply conduit extends entirely through said tank interior space.

10. The use of the system as in claim 1 for applying agro-chemicals.

## Patentansprüche

1. Transportierbares Tanksystem zur Aufnahme und Mischung von mindestens zwei verschiedenen Flüssigkeiten (11, 12), wobei das System folgendes umfaßt: eine Druckbeaufschlagungsfluidquelle (29), eine Verteileranordnung (30), die einen Kanal (40) für die verschiedenen Flüssigkeiten (11, 12) und einen Kanal (41) für das Druckbeaufschlagungsfluid definiert, eine Druckbeaufschlagungsversorgungsleitung (37) und Flüssigkeitsversorgungssteigleitungen (33, 34), wobei die verschiedenen Flüssigkeiten (11, 12) mittels des Druckbeaufschlagungsfluids in den Flüssigkeitskanal (40) zwangseingeführt und vor der Abführung durch einen Abführkanal (50) in dem Flüssigkeitskanal (40) miteinander vermischt werden, dadurch gekennzeichnet, daß das Tanksystem einen Tank (10) mit einem Innenraum und einer oder mehreren Teilungswänden (13) aufweist, die jeweils mindestens zwei Fluidtrennungs-Aufnahmeabteile (14, 15) zur Aufnahme einer jeweiligen der verschiedenen Flüssigkeiten (11, 12) bilden, und wobei es sich bei dem Druckbeaufschlagungsfluidversorgungskanal um einen Einzelfluidversorgungskanal (37) handelt, der eine Strömungsverbindung zwischen der Druckbeaufschlagungsfluidquelle (29) und dem Druckbeaufschlagungsfluidkanal (41) bereitstellt, und wobei der Druckbeaufschlagungsfluidkanal (41) mit jedem der Aufnahmeabteile in Strömungsverbindung steht, so daß das Druckbeaufschlagungsfluid im wesentlichen gleichmäßig dazwischen verteilt wird.

2. System nach Anspruch 1, bei dem die Verteileranordnung (30) einen Gehäuseblock (39) enthält, der den Kanal (41) für Druckbeaufschlagungsfluid und den Flüssigkeitskanal (40) einstückig definiert.

3. System nach Anspruch 1, bei dem der Tank (10) mindestens einen Versorgungskanal (16, 17) für jedes Fluidtrennungsabteil enthält.

4. System nach Anspruch 1, weiterhin mit einer Mischeinheit (42), die mit dem Abführkanal (50) in Strömungsverbindung steht.

5. System nach Anspruch 1, weiterhin mit einem Füllstandsmesser (24, 25) für jedes Fluidtrennungsabteil.

6. System nach Anspruch 1, weiterhin mit einer flexiblen Übertragungsleitung (8), die an ihrem proximalen Ende mit dem Abführkanal (50) verbunden werden kann und an ihrem distalen Ende eine Strömungskupplung (9) enthält.

7. System nach Anspruch 6, bei dem die Strömungskupplung (9) eine Strömungssperre enthält, die bei Fehlen von Flüssigkeitsströmung durch den Übertragungskanal (8) eine Fluiddichtung bildet.

8. System nach Anspruch 7, bei dem die Strömungskupplung (9) eine Vorspannfeder zum Vorspannen der Strömungssperre in eine Richtung zur Bildung der Fluiddichtung enthält.

9. System nach Anspruch 1, bei dem sich die Druckbeaufschlagungsfluidversorgungsleitung durch den gesamten Tankinnenraum erstreckt.

10. Verwendung des Systems nach Anspruch 1 zum Ausbringen von Agrikulturchemikalien.

## Revendications

1. Système portable de cuve de stockage et de mélange pour au moins deux liquides différents (11, 12), ce système ayant une source de fluide de mise sous pression (29), un ensemble collecteur (30) formant une voie (40) pour les liquides différents (11,12) et une voie (41) pour le fluide de mise sous pression, ce système de cuve comprenant en outre une conduite d'alimentation en fluide de mise sous pression (37) et des colonnes montantes d'alimentation en liquide (33, 34), dans lequel les liquides différents (11, 12) sont introduits de force dans la voie de liquides (40) au moyen du fluide de mise sous pression et sont mélangés ensemble dans cette voie (40) avant de sortir par un orifice de sortie (50), caractérisé par le fait qu'il comprend une cuve (10) ayant un espace intérieur et une ou plusieurs cloisons (13) qui créent chacune au moins deux compartiments de stockage isolés (14, 15) destinés à contenir chacun un des liquides différents (11, 12), et dans lequel la conduite d'alimentation en fluide de mise sous pression est une conduite unique (37) qui relie la source de fluide de mise sous pression (29) à la voie de fluide de mise sous pression (41), et dans lequel la voie de fluide de mise sous pression (41) est reliée à chacun des compartiments de stockage afin que le fluide de mise sous pression soit distribué sensiblement également entre ceux-ci.

2. Système selon la revendication 1, dans lequel l'ensemble collecteur (30) comporte un bloc logement (39) qui forme intégralement la voie de fluide de mise sous pression (41) et la voie de liquides (40).

3. Système selon la revendication 1, dans lequel la cuve (10) comporte un orifice d'entrée (16, 17) pour chaque compartiment isolé.

4. Système selon la revendication 1, comprenant en outre un dispositif de mélange (42) relié à l'orifice de sortie (50).

5. Système selon la revendication 1, comprenant en outre une jauge de niveau (24, 25) pour chaque compartiment isolé.

6. Système selon la revendication 1, comprenant en outre une conduite souple de transfert (8) pouvant être branchée à son extrémité proximale à l'orifice de sortie (50) et comportant un raccord d'écoulement (9) à son extrémité distale.

7. Système selon la revendication 6, dans lequel le raccord d'écoulement (9) comporte un élément d'arrêt d'écoulement qui forme un joint étanche aux fluides en l'absence d'écoulement de liquide dans la conduite de transfert (8).

8. Système selon la revendication 7, dans lequel le raccord d'écoulement (9) comporte un ressort de rappel destiné à rappeler l'élément d'arrêt d'écoulement dans un sens pour former le joint étanche aux fluides.

9. Système selon la revendication 1, dans lequel la conduite d'alimentation en fluide de mise sous pression s'étend entièrement à travers l'espace intérieur de la cuve.

10. Utilisation du système selon la revendication 1 pour l'application de produits chimiques agricoles.
